(19) Europäisches Patentamt
European Patent Office
Office européen des brevets

(11) Publication number: 0 019 359
B1

(12) EUROPEAN PATENT SPECIFICATION

(45) Date of publication of patent specification: 27.06.84

(51) Int. Cl.³: A 01 N 25/02, A 01 N 43/64

(21) Application number: 80301205.3

(22) Date of filing: 16.04.80

(54) **Agrochemical formulations.**

(30) Priority: 15.05.79 GB 7916861

(43) Date of publication of application: 26.11.80 Bulletin 80/24

(45) Publication of the grant of the patent: 27.06.84 Bulletin 84/26

(84) Designated Contracting States: BE CH DE FR GB IT LI NL SE

(56) References cited:
EP - A - 0 003 251
EP - A - 0 006 293
FR - A - 2 255 851
FR - A - 2 358 207
GB - A - 1 209 524

Chemie Ingenieur Technik: Vol 41 (1969) p. 503-7
Transactions of the ASEA, Vol. 9, (1966) p. 501- 6
Pesticide Science, 8 p. 243-253(1977)

Zeitschrift für angewandte Physik: XIII Band 1, p. 11-16 (1961)

The file contains technical information submitted after the application was filed and not included in this specification

(73) Proprietor: IMPERIAL CHEMICAL INDUSTRIES PLC
Imperial Chemical House Millbank
London SW1P 3JF (GB)

(72) Inventor: Coffee, R. A.
Verdley House
Fernhurst Haslemere, Surrey (GB)
Inventor: Middleton, M. R. Plant Protection Division
Jealott's Hill Research Station
Brancknell, Berkshire (GB)

(74) Representative: Fawcett, Richard Fennelly et al,
Imperial Chemical Industries PLC Legal Department: Patents PO Box 6
Welwyn Garden City Herts, AL7 1HD (GB)

EP 0 019 359 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to agrochemical formulations, and more particularly to agrochemical formulations containing azoles.

Recently a class of substituted azoles (diazoles and triazoles) has been found to have numerous members with a variety of uses in agriculture. Such azoles have the general formula (I):

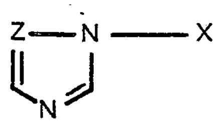

wherein Z is =N— or =CH—, and X is a saturated or unsaturated carbon chain having 2, 3 or more chain carbon atoms, the chain carrying on its second or third carbon atom an oxygen atom either in the form of a hydroxy group or an ester thereof or in the form of a carbonyl group or a derivative thereof, e.g. a ketal, and the chain optionally carrying one or two further oxygen atoms as defined above and/or at least one optionally substituted alkyl, alkenyl, alkynyl, cycloalkyl, aryl, aralkyl, aralkenyl, alkoxy, alkenyloxy, alkynyloxy, cycloalkoxy, aryloxy, aralkyloxy, aralkenyloxy, or heterocyclic group; or an acid addition salt or metal complex thereof. The main uses which compounds of this type display are:
as fungicides, particularly against powdery mildews of cereals *(Erysiphe graminis)* and in some cases cereal rusts (for example *Puccinia recondita* on wheat, *Puccinia hordei* or barley)
as plant growth regulators, in particular as stunting or dwarfing agents leading to the development of smaller plants with darker green leaves
and, in certain cases, as herbicides.

Examples of sub-classes of this class are the following:

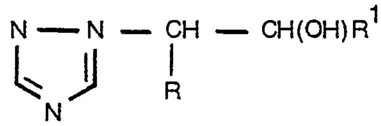

(II)

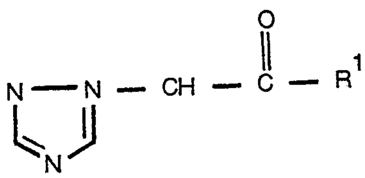

(III)

where R is phenyl, phenoxy or benzyl, optionally substituted in each case, and $R^1$ is $C_1$—$C_6$ alkyl, in particular *tert*-butyl, or optionally substituted phenyl.

Specific examples of such compounds are the mildew fungicide of formula (III) above, in which R is *p*-chlorophenoxy and $R^1$ is *tert*-butyl, common name triadimefon, and its analogues disclosed in UK Patent Specification No 1364619 to Bayer AG; the mildew and rust fungicide of formula (II) above, in which R is 2,4-dichlorobenzyl and $R^1$ is *tert*-butyl; and the plant growth regulator of formula (II) above in which R is 4-chlorobenzyl and $R^1$ is *tert*-butyl; and their analogues disclosed in our Dutch Patent Application 7709197. Other suitable compounds are disclosed in Dutch Patent Applications 7602502, 7609439, 7613372, 7708424 and 7709443; French Patent Specifications 2323689 and 2354324; British Patent Specifications 1492882 and 1504352 and German Offenlegungsschrifts 2802496 and 2819879.

Compounds of the type set forth above are hereinafter referred to as "substituted azole(s) as herein defined".

Substituted azoles, as herein defined, being active at low rates, are well suited to agricultural application by the known ULV (ultra-low volume) technique. This method uses relatively concentrated liquid formulations containing e.g. 1 to 50% by weight of active ingredient, and a correspondingly low rate of application of the formulation per hectare, e.g. 0.5—10 litres per hectare, in contrast with more usual high volume spray rates of 200—500 litres per hectare, or more. ULV formulations are in several respects safer than conventional high-volume sprays, because they do not require dilution, with the attendent risk of dilution errors or spillages. With such relatively concentrated solutions, it is important to ensure that as much as possible of the formulation goes and stays where it is needed, i.e. on the plants being sprayed, and as little as possible is misdirected onto the ground or carried away by the wind. For this purpose, it is useful to apply electrostatically charged sprays. These are attracted to the foliage of plants; electrostatic forces carry them to the underside of leaves as well as to the top surfaces, and even coating is promoted. Hitherto electrostatic spraying of pesticides has not been widely adopted, for lack of convenient, reliable and cheap spraying apparatus. A suitable apparatus is however now available, and is described in UK Patent 1569707. We have also found that ultra-low

volume sprays of substituted triazoles as herein defined are biologically more effective in the form of small droplets e.g. below 100 microns in diameter. Such droplets are particularly prone to drift unless electrostatically charged.

It is known from Schultze (Zeitschrift fur angewandte Physik, 1961, (1), Band XIII, pages 11—16) that the behaviour of liquids atomising in an electrostatic field varies according to their conductivities. However, Schultze, working with apparatus different from that of UK Patent 1569707, obtains either coarse droplets, or at higher conductivities fine droplets with irregular atomisation; accordingly there is no incentive to adapt his teaching for use in spraying pesticide formulations. The use of pesticide formulations according to the present invention to obtain fine sprays of uniform particle size is not predictable from this reference.

The object of the present invention is to provide a class of agrochemical compositions particularly suited to ULV electrostatic spraying, in particular by apparatus of the type described in UK Patent 1569707.

According to the present invention we provide an electrostatically sprayable ready-for-use agrochemical formulation suitable for use in an electrostatic spraying apparatus to spray plants to give an even coating of agrochemical on the leaves of said plants, the formulation having a viscosity at 20°C in the range 1 to 50 centistokes, and characterised by comprising a solution of 1 to 8% by weight of a substituted azole of general formula (I)

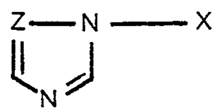

wherein Z is =N— or =CH—, and X is a saturated or unsaturated carbon chain having 2, 3 or more chain carbon atoms, the chain carrying on its second or third carbon atom an oxygen atom either in the form of a hydroxy group or an ester thereof or in the form of a carbonyl group or a derivative thereof which is a ketal, and the chain optionally carrying one or two further oxygen atoms as defined above and/or at least one optionally substituted alkyl, alkenyl, alkynyl, cycloalkyl, aryl, aralkyl, aralkenyl, alkoxy, alkenyloxy, alkynyloxy, cycloalkoxy, aryloxy, aralkyloxy, aralkenyloxy, or heterocyclic group, or an acid addition salt or metal complex thereof, in an inert organic solvent medium, the formulation having a resistivity at 20°C in the range of $1 \times 10^6$ to $1 \times 10^{10}$ ohm cm.

We find that solutions according to the invention are readily sprayed at satisfactory rates using the apparatus of UK Patent 1569707 and will give a range of mean spray droplet sizes of from about 50 to about 200 microns in diameter, according to the strength of the electrostatic field applied to them (the stronger the field the smaller the droplets), flow rate through the apparatus and other operating conditions.

The resistivity of solutions according to the invention is conveniently measured by measuring the resistance of a cell of standard dimensions containing the solution held at a temperature of 20°C, using, for example, a Keithley electrometer. It is preferred that the resistivity of the solutions be in the range $10^7$ to $10^9$ ohm centimetres.

The viscosity of solutions according to the invention is conveniently measured by timing the flow of a measured quantity of the solution through a hole of known size (as is done, for example, in the Redwood viscometer). It is preferred that the viscosity of the solution is in the range 2 to 20 centistokes.

The resistivity and viscosity of the solutions depend primarily on the properties of the solvents used to make them, though they are also affected by the nature and amount of the dissolved substituted azole.

One way of obtaining the desired properties is to mix solvents having various resistivities and viscosities. High-boiling hydrocarbon solvents, e.g. 'Solvesso' (Registered Trademark) 150, are convenient and relatively cheap, but usually have low viscosities (e.g. of the order of 3 centistokes) and high resistivities (e.g. of the order of $10^{11}$ ohm centimetres). To bring down the resistivity of these materials, they may be mixed with polar solvents such as alcohols and in particular ketonic solvents. These have lower resistivities but are also usually not viscous enough; for example, the useful solvent cyclohexanone has a resistivity of about $2 \times 10^6$ ohm centimetres, but a viscosity of only about 3 centistokes. However the viscosity of the solution may be increased by addition of more viscous oil-soluble solvents, for example polybutenes e.g. 'Hyvis (Registered Trademark) and long-chain chlorinated hydrocarbon products such as 'Cereclor' (Registered Trademark) C42 or C48. The latter has a high resistivity, greater than $10^{10}$ ohm centimetres, and a high viscosity, of the order of 100 centistokes. By suitable adjustment of the proportions of three solvents such as these, a solution of the desired properties can easily be obtained.

The resistivity of solvents and solutions is easily affected by the presence of water or other contaminants. It is not necessary always to use ultra-pure materials, but consistent results will only be obtained from materials of consistent composition; and formulations which have been made up with the desired properties should thereafter be protected from any further contamination, especially by water.

Another way of producing a solution with the required properties is to make up a solution of the required viscosity but excessive resistivity (e.g. from a mixture of hydrocarbons and long-chain chlorinated hydrocarbons) and then dose this with an antistatic agent to reduce the resistivity to the desired level. A suitable antistatic agent is sold for use as a static charge dissipator with hydrocarbon fuels under the name 'ASA'; it consists of a complex mixture of copper and chromium cations with various organic acid anions. Other similar materials, e.g. copper oleates, may also be used. This technique is not generally suitable by itself for producing solutions having a resistivity below about $10^8$ ohm centimetres.

Examples of substituted azoles suitable for use in the solutions of the invention include compounds of formula (III) listed below in Table I (in which triadimefon is Compound No 3).

TABLE I

| COMPOUND NO | R | $R^1$ |
|---|---|---|
| 1 | 2,4-dichlorobenzyl | *tert*-butyl |
| 2 | 4-chlorobenzyl | *tert*-butyl |
| 3 | 4-chlorophenoxy | *tert*-butyl |
| 4 | 4-chlorobenzyl | phenyl |
| 5 | H | 2,4-dichlorophenyl |

Ketals of the above compounds, in particular ketals of compound no 5, e.g. the ethyl ethylene and ethyl propylene ketals, are also useful.

The following Examples illustrate the invention.

Example 1

The following solution was made by mixing together the constituents.

| Ingredient | Parts by weight |
|---|---|
| Compound No 1 of Table I | 20 |
| "Solvesso" 150 | 125 |
| Cyclohexanone | 350 |
| "Cereclor" C42 | 505 |

Viscosity 18 centistokes; resistivity 2.5 x $10^7$ ohm centimetres (both measured at 20°C).

This solution atomised very satisfactorily from the device illustrated in figures 1—3 of UK Patent 1569707.

Example 2

The following solutions A and B were made by mixing together the constituents.

| | A | B |
|---|---|---|
| Ingredient | Parts by weight | Parts by weight |
| Compound No 1 of Table I | 10 | 5 |
| "Solvesso" 150 | 120 | 40 |
| Cyclohexanone | 380 | 470 |
| Properties at 20°C | | |
| Viscosity (centistokes) | 18.6 | 17.8 |
| Resistivity (ohm centimetres) | 2.8 x $10^7$ | 2.5 x $10^7$ |

Both solutions atomise satisfactorily from the device illustrated in figures 1—3 of UK Patent 1569707. In field tests on wheat rust in Brazil, electrostatically sprayed, they gave equivalent control to conventional uncharged high-volume sprays of the same active ingredient at the same rate of application.

Example 3

A solution according to the invention was made by mixing together the following ingredients.

| Ingredient | Parts by weight |
|---|---|
| Triadimefon | 2.5 |
| Dimethyl formamide | 7.5 |
| 'Solvesso' 150 | 40 |
| Groundnut oil | 50 |
| | 100 |

Resistivity = $1.5 \times 10^8$ ohm cm at 25°C; Viscosity 6 centistokes.

**Claims**

1. An electrostatically sprayable ready-for-use agrochemical formulation suitable for use in an electrostatic spraying apparatus to spray plants to give an even coating of agrochemical on the leaves of said plants, the formulation having a viscosity at 20°C in the range 1 to 50 centistokes, and characterised by comprising a solution of 1 to 8% by weight of a substituted azole of general formula (I)

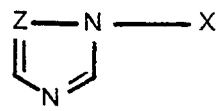

wherein Z is =N— or =CH—, and X is a saturated or unsaturated carbon chain having 2, 3 or more chain carbon atoms, the chain carrying on its second or third carbon atom an oxygen atom either in the form of a hydroxy group or an ester thereof or in the form of a carbonyl group or a derivative thereof which is a ketal, and the chain optionally carrying one or two further oxygen atoms as defined above and/or at least one optionally substituted alkyl, alkenyl, alkynyl, cycloalkyl, aryl, aralkyl, aralkenyl, alkoxy, alkenyloxy, alkynyloxy, cycloalkoxy, aryloxy, aralkyloxy, aralkenyloxy, or heterocyclic group, or an acid addition salt or metal complex thereof, in an inert organic solvent medium, the formulation having a resistivity at 20°C in the range of $1 \times 10^6$ to $1 \times 10^{10}$ ohm cm.

2. A formulation according to claim 1 characterised in that the azole is a fungicide.

3. A formulation according to claim 1 or 2 characterised in that the resistivity of the formulation is in the range $10^7$ to $10^9$ ohm centimetres.

4. A formulation according to any one of the preceding claims characterised in that the organic solvent medium is a mixture of solvents blended to produce the desired resistivity or viscosity.

5. A formulation as claimed in any one of the preceding claims characterised by further comprising an antistatic agent to reduce the resistivity of the formulation.

6. A method of combatting fungal infections in a plant, regulating the growth of a plant or killing a plant, characterised by electrostatically spraying the plant with a formulation according to any one of the preceding claims.

**Patentansprüche**

1. Elektrostatisch verspritzbare, gebrauchsfertige agrochemische Formulierung, die sich für die Verwendung in einer elektrostatischen Spritzvorrichtung zum Bespritzen von Pflanzen zwecks Erzeugung einer gleichmäßigen Beschichtung der agrochemikalischen Formulierung auf den Blättern der Pflanzen eignet, wobei die Formulierung bei 20°C eine Viskosität im Bereich von 1 bis 50 Centistoke aufweist, dadurch gekennzeichnet, daß sie aus einer Lösung von 1 bis 8 Gew.-% eines substituierten Azoles der allgemeinen Formel

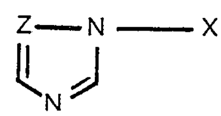

(I)

worin Z für =N— oder =CH— steht und X für eine gesättigte oder ungesättigte Kohlenstoffkette mit 2, 3 oder mehr Kettenkohlenstoffatomen steht, wobei die Kette an ihrem zweiten oder dritten Kohlenstoffatom ein Sauerstoffatom in Form einer Hydroxygruppe oder eines Esters derselben oder in Form einer Carbonylgruppe oder eines Derivats derselben, das ein Ketal ist, trägt und wobei die Kette gegebenenfalls ein oder zwei weitere Sauerstoffatome gemäß vorstehender Definition und/oder mindestens eine gegebenenfalls substituierte Alkyl-, Alkenyl-, Alkinyl-, Cycloalkyl-, Aryl-, Aralkyl-, Aralkenyl-, Alkoxy-, Alkenyloxy-, Alkinyloxy-, Cycloalkoxy-, Aryloxy-, Aralkyloxy-, Aralkenyloxy- oder heterocyclische Gruppe trägt, oder eines Säureadditionssalzes oder eines Metallkomplexes davon in einem inerten organischen Lösungsmittelmedium besteht, wobei die Formulierung bei 20°C einen spezifischen Widerstand im Bereich von $1 \times 10^6$ bis $1 \times 10^{10}$ Ohm cm aufweist.

2. Formulierung nach Anspruch 1, dadurch gekennzeichnet, daß das Azol ein Fungicid ist.

3. Formulierung nach Anspruch 1 oder 2, dadurch gekennzeichnet, daß der spezifische Widerstand der Formulierung im Bereich von $10^7$ bis $10^9$ Ohm cm liegt.

4. Formulierung nach einem der vorhergehenden Ansprüche, dadurch gekennzeichnet, daß das organische Lösungsmittelmedium ein Gemisch von Lösungsmitteln ist, das so gemischt ist, daß der gewünschte spezifische Widerstand oder die gewünschte Viskosität erhalten wird.

5. Formulierung nach einem der vorhergehenden Ansprüche, dadurch gekennzeichnet, daß sie weiterhin ein antistatisches Mittel enthält, um den spezifischen Widerstand der Formulierung zu verringern.

6. Verfahren zum Bekämpfen von Pilzinfektionen bei einer Pflanze, zur Regulierung des Wachstums einer Pflanze oder zum Abtöten einer Pflanze, dadurch gekennzeichnet, daß die Pflanze elektrostatisch mit einer Formulierung nach einem der vorhergehenden Ansprüche bespritzt wird.

**Revendications**

1. Formulation agrochimique prête à l'emploi applicable par pulvérisation électrostatique, apte à être utilisée dans un appareil de pulvérisation électrostatique pour traiter des plantes par pulvérisation de manière à former un revêtement uniforme de substance agrochimique sur les feuilles desdites plantes, la formulation ayant une viscosité à 20°C comprise dans l'intervalle de 1 à 50 centistokes, et étant caractérisée en ce qu'elle comprend une solution de 1 à 8% en poids d'un azole substitué de formule générale (I)

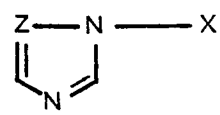

dans laquelle Z représente =N— ou =CH— et X est une chaîne carbonée saturée ou insaturée ayant 2, 3 ou plus de 3 atomes de carbone un chaîne, la chaîne portant sur son deuxième ou son troisième atome de carbone, un atome d'oxygène sous la forme d'un groupe hydroxy ou d'un ester de ce groupe ou sous la forme d'un groupe carbonyle ou d'un dérivé de ce groupe qui est un cétal, et la chaîne portant éventuellement un ou deux autres atomes d'oxygène tels que définis ci-dessus et/ou au moins un groupe alkyle, alcényle, alcynyle, cycloalkyle, aryle, aralkyle, aralcényle, alkoxy, alcényloxy, alcynyloxy, cycloalkoxy, aryloxy, aralkyloxy, aralcényloxy ou hétérocyclique éventuellement substitué ou un sel d'addition d'acide ou un complexe métallique de ce composé dans un solvant organique inerte, la formulation ayant une résistivité à 20°C de $1 \times 10^6$ à $1 \times 10^{10}$ ohms-cm.

2. Formulation suivant la revendication 1, caractérisée en ce que l'azole est un fongicide.

3. Formulation suivant la revendication 1 ou 2, caractérisée en ce que sa résistivité se situe dans l'intervalle de $10^7$ à $10^9$ ohms-centimètres.

4. Formulation suivant l'une quelconque des revendications précédentes, caractérisée en ce que le solvant organique est un mélange de solvants associés de manière à établir la résistivité ou la viscosité désirée.

5. Formulation suivant l'une quelconque des revendications précédentes, caractérisée en ce qu'elle comprend un outre un agent antistatique destiné à réduire sa résistivité.

6. Procédé pour combattre des infections fongiques chez une plante, pour influencer la croissance d'une plante ou pour détruire une plante, caractérisé par la pulvérisation électrostatique sur la plante d'une formulation suivant l'une quelconque des revendications précédentes.